# EUROPÄISCHE PATENTSCHRIFT

(11) **EP 2 595 718 B1**
(45) Veröffentlichungstag und Bekanntmachung des Hinweises auf die Patenterteilung: **19.10.2016**
(21) Anmeldenummer: 11731388.2
(22) Anmeldetag: 14.07.2011
(51) Int. Cl.: B01D 29/11, B01D 29/21, B01D 29/58

(54) **HYDRAULIKFILTERELEMENT UND ZUGEHÖRIGES HERSTELLUNGSVERFAHREN**
HYDRAULIC FILTER ELEMENT AND ASSOCIATED PRODUCTION METHOD
ELÉMENT FILTRE HYDRAULIQUE ET PROCÉDÉ DE FABRICATION DUDIT ÉLÉMENT FILTRE

(30) Priorität: 20.07.2010 DE 102010031804
(43) Veröffentlichungstag der Anmeldung: 29.05.2013
(73) Patentinhaber: Mahle International GmbH, 70376 Stuttgart (DE)
(72) Erfinder: SCHÖPP, Wilhelm, 68804 Altlußheim (DE); WIERLING, Reinhard, 74629 Pfedelbach (DE)
(74) Vertreter: BRP Renaud & Partner mbB Rechtsanwälte Patentanwälte Steuerberater
(86) Internationale Anmeldenummer: PCT/EP2011/062089
(87) Internationale Veröffentlichungsnummer: WO 2012/010499

(56) Entgegenhaltungen:
- DE-U1-202005 001 693
- US-A- 3 376 979
- US-A- 6 143 106

## Beschreibung

Die vorliegende Erfindung betrifft ein Hydraulikfilterelement, insbesondere ein Ölfilterelement, gemäß dem Oberbegriff des Anspruchs 1. Die Erfindung betrifft außerdem ein Verfahren zum Herstellen eines derartigen Hydraulikfilterelements.

Hydraulikfilterelemente besitzen üblicherweise einen zylindrischen Filterkörper, der aus einem sternförmig gefalteten Filtermaterial hergestellt ist. Aufgrund der im Einsatz auftretenden großen Druckunterschiede zwischen einer außenliegenden Rohseite und einer innenliegenden Reinseite kann ein derartiges Hydraulikfilterelement außerdem mit einer zylindrischen Innenzarge ausgestattet sein, an der sich der Filterkörper radial innen abstützen kann. Ferner können axiale Endscheiben vorgesehen sein, die an gegenüberliegenden axialen Enden des Filterkörpers angeordnet sind.

Bei der Herstellung derartiger Hydraulikfilterelemente wird die Innenzarge in das gefaltete Filtermaterial eingesteckt und das Filtermaterial wird mit Hilfe von Spannelementen, wie Bänder, Schnüren und dergleichen, gegen die Innenzarge vorgespannt. In diesem vorgespannten Zustand werden die Endscheiben angebracht, um die Relativlage zwischen Filtermaterial und Innenzarge zu fixieren. Nach dem Anbringen der Endscheiben sind die vorgenannten Spannelemente wieder zu entfernen. Das Anbringen und Entfernen derartiger Spannelemente erfordert vergleichsweise zeitintensive und relativ kostenintensive Herstellungsschritte. Ferner sind diese Schritte mit relativ hoher Sorgfalt durchzuführen, um die gewünschte Kontaktierung zwischen Filtermaterial und Innenzarge zu erhalten, was zur Erzielung der erforderlichen Lebensdauer für das Hydraulikfilterelement von erhöhter Bedeutung ist.

Aus der nachveröffentlichten DE 10 2009 005 980 A1 ist ein Hydraulikfilterelement bekannt, das einen zylindrischen Filterkörper aus einem sternförmig gefalteten Filtermaterial, eine zylindrische Innenzarge, an der sich der Filterkörper radial innen abstützt, und eine für das jeweilige Hydraulikmittel durchlässige, zylindrische Hülle aufweist, die radial außen am Filterkörper unter Vorspannung anliegt. Beim bekannten Hydraulikfilterelement besteht die Hülle aus einem Vliesmaterial, das insbesondere schrumpfbar ausgestaltet sein kann.

Ein gattungsgemäßes Hydraulikfilterelement ist aus der US 6 143 106 A bekannt. Es umfasst einen zylindrischen Filterkörper aus einem sternförmig gefalteten Filtermaterial, eine zylindrische Innenzarge, an der sich der Filterkörper radial innen spielfrei abstützt, eine für das jeweilige Hydraulikmittel durchlässige, zylindrische Hülle, die radial außen am Filterkörper unter Vorspannung anliegt und die aus einem gewebten Textilmaterial besteht, und zwei Endscheiben, die an axialen Enden des Filterkörpers angebracht sind und zumindest mit dem Filtermaterial verklebt sind, um die Relativlage zwischen Filtermaterial und Innenzarge zu fixieren. Beim bekannten Hydrauikfilterelement ist das Textilmaterial der Hülle elastisch dehnbar und liegt radial nach innen vorgespannt am Filterkörper an.

Aus der DE 20 2005 001 693 U1 ist ein Hydraulikfilterelement ohne Innenzarge bekannt, dessen Hülle aus einem schrumpfbaren Material besteht und auf den Filterkörper aufgeschrumpft ist.

Die vorliegende Erfindung beschäftigt sich mit dem Problem, für ein Hydraulikfilterelement bzw. für ein zugehöriges Herstellungsverfahren eine verbesserte Ausführungsform anzugeben, die sich insbesondere dadurch charakterisiert, dass sie vergleichsweise preiswert realisierbar ist, eine hohe Reproduzierbarkeit besitzt und vorzugsweise eine lange Standzeit für das Hydraulikfilterelement unterstützt. Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, das Filterelement mit einer zylindrischen Hülle auszustatten, die außen am Filterkörper angeordnet ist und die für das jeweilige Hydraulikmittel durchlässig ist und die unter radialer Vorspannung am Filterkörper anliegt. Diese Hülle kann im Rahmen der Herstellung des Filterelements dazu verwendet werden, das Filtermaterial gegen die Innenzarge vorzuspannen bzw. daran anzudrücken. Der besondere Vorteil der Hülle ist, dass sie nach der Herstellung des Filterelements daran verbleiben kann, da sie für das jeweilige Hydraulikfluid durchlässig ist. Hierdurch reduziert sich der Aufwand bei der Herstellung des Filterelements. Ferner kann sich eine derartige Hülle in der Axialrichtung über die gesamte Länge oder Höhe des Filterkörpers erstrecken, was die Vorspannung des Filtermaterials gegen die Innenzarge verbessert und insbesondere gleichmäßig und mit höherer Zuverlässigkeit erzeugen lässt. Darüber hinaus besitzt das mit der Hülle ausgestattete Filterelement eine verbesserte Funktionalität, da die Hülle als Vorfilter oder Grobschmutzfilter arbeiten kann, was zum Beispiel eine Beschädigung oder Beeinträchtigung des Filtermaterials durch grobkörnige Verunreinigungen verhindert oder zumindest behindert. Insofern wirkt sich die Hülle bereits positiv auf die Standzeit des Filterelements aus. Die erhöhte Zuverlässigkeit und Verbesserung des Andrückens des Filtermaterials gegen die Innenzarge während der Herstellung des Filterelements führt zu qualitativ hochwertigen Filterelementen, die sich durch eine vergleichsweise hohe Standzeit auszeichnen.

Außerdem liegt die Hülle unter Vorspannung am Filterkörper an. Diese Vorspannung ist auf die Vorspannwirkung der Hülle zurückzuführen, mit der die Hülle im Rahmen der Herstellung des Filterelements das Filtermaterial gegen die Innenzarge andrückt. Besonders vorteilhaft ist bei der Erfindung, dass die Hülle das Filtermaterial spielfrei gegen die Innenzarge andrückt. Hierdurch ergibt sich eine exakt definierte Relativlage zwischen Filtermaterial und Innenzarge bereits während der Herstellung des Filterelements, was zu einer besonders hohen Standzeit für das Filterelement führt.

Beim erfindungsgemäßen Hydraulikfilterelement besteht die Hülle aus einem Textilmaterial. Ein derartiges Textilmaterial ist gewebt oder gestrickt oder gewirkt und besitzt dadurch eine geordnete Struktur. Hierdurch ist es insbesondere möglich, das Textilmaterial mit richtungsabhängigen Eigenschaften, wie z.B. Schrumpfbarkeit, Elastizität oder Dehnbarkeit, auszustatten. Ebenso lassen sich die Eigenschaften des Textilmaterials durch Auswahl der zur Herstellung des Textilmaterials verwendeten Fasern, z.B. im Hinblick auf Fasermaterial und Faserstärke, vergleichsweise genau einstellen.

Die geordnete Struktur des Textilmaterials besitzt im Vergleich zu einer ungeordneten Struktur eines Vliesstoffes eine größere freie Oberfläche, wodurch der Durchströmungswiderstand des Textilmaterials kleiner ist als der eines vergleichbaren Vliesstoffes.

Erfindungsgemäß besteht die Hülle aus einem textilen Schrumpfmaterial. Ein Schrumpfmaterial charakterisiert sich dadurch, dass es bei bestimmten Randbedingungen, insbesondere bei einer thermischen Behandlung, hinsichtlich seiner Abmessungen schrumpft. Die Verwendung einer Hülle aus einem textilen Schrumpfmaterial ermöglicht im Rahmen der Herstellung des Filterelements ein Aufschrumpfen der Hülle auf den Filterkörper und damit gleichzeitig ein Aufschrumpfen des Filtermaterials auf die Innenzarge. Das bedeutet, dass durch das Schrumpfen der Hülle das Filtermaterial soweit zusammengedrückt wird, dass es an der Innenzarge zur Anlage kommt, wobei insbesondere sämtliches Radialspiel zwischen Filtermaterial und Innenzarge eliminiert werden kann. Die Verwendung eines Schrumpfmaterials für die Hülle vereinfacht somit die Herstellung des Filterelements und führt zu einer extrem hohen Reproduzierbarkeit bei gleichzeitig hoher Fertigungsqualität.

Erfindungsgemäß ist die Hülle somit auf den Filterkörper aufgeschrumpft, wobei das für die Hülle verwendete Textilmaterial so konzipiert ist, dass es während des Schrumpfvorgangs zumindest in der Umfangsrichtung oder bevorzugt in der Umfangsrichtung oder ausschließlich in der Umfangsrichtung schrumpft. Durch die Verwendung eines derartigen schrumpfbaren Textilmaterials kann die Herstellung des Hydraulikfilterelements erheblich vereinfacht werden. Beispielsweise kann für die Hülle aus dem Textilmaterial ein Rohling hergestellt werden, dessen Innenquerschnitt größer ist als der Außenquerschnitt des Filterkörpers, wodurch die Hülle besonders einfach auf den Filterkörper aufgezogen bzw. aufgestülpt werden kann. Während des Schrumpfvorgangs zieht sich das Textilmaterial in der Umfangsrichtung der Hülle gleichmäßig zusammen und bewirkt dadurch eine gleichmäßige radiale Vorspannung, die das Filtermaterial an der Innenzarge zur Anlage bringt. Da die über die Hülle eingeleiteten Vorspannkräfte gleichmäßig und somit schonend auf das Filtermaterial übertragen werden, kann die Gefahr einer Beschädigung des Filtermaterials reduziert werden. Ferner führt die gleichmäßige Schrumpfung der Hülle dazu, dass auch die Faltenstruktur des Filterkörpers gleichmäßig erhalten bleibt.

Entsprechend einer vorteilhaften Ausführungsform kann das Textilmaterial eine Kette-Schuss-Struktur mit zueinander parallelen Kettfasern und dazu quer verlaufenden Schussfasern aufweisen. Eine derartige Kette-Schuss-Struktur lässt sich besonders preiswert als Bahnenmaterial oder Flachmaterial maschinell herstellen. Von besonderem Vorteil ist dabei eine Ausgestaltung, bei welcher die Kettfasern und die Schussfasern aus verschiedenen Kunststoffen bzw. Kunststoffkombinationen bestehen. Beispielsweise bestehen die Kettfasern aus Polyester, während die Schussfasern aus Polyamid bestehen, oder umgekehrt. Hierdurch lassen sich verschiedene Eigenschaften des Textilmaterials in zueinander senkrechten Richtungen unterschiedlich einstellen, wie z.B. Schrumpfbarkeit und Elastizität bzw. Dehnbarkeit.

Zweckmäßig kann das flächige oder bahnförmige Textilmaterial so zur Hülle geformt werden, dass innerhalb der Hülle die Kettfasern axial verlaufen, während sich die Schussfasern in der Umfangsrichtung erstrecken, oder umgekehrt. Hierdurch können die zuvor genannten Eigenschaften in der Axialrichtung und in der Umfangsrichtung unterschiedlich konzipiert werden.

Von besonderem Vorteil ist dabei eine Ausführungsform, bei welcher das schrumpfbare Textilmaterial so ausgestaltet ist, dass es in der Umfangsrichtung einen größeren Schrumpf aufweist als in der Axialrichtung. Das bedeutet, dass sich das Textilmaterial beim Schrumpfprozess in der Umfangsrichtung stärker zusammenzieht als in der Axialrichtung, so dass im Wesentlichen nur die radiale Vorspannung, mit welcher die Hülle das Filtermaterial gegen die Innenzarge andrückt, vergrößert wird, wobei sich der Querschnitt der Hülle entsprechend dem Querschnitt des Filterkörpers reduzieren kann, während sich die axiale Länge der Hülle dabei kaum verändert.

Die Fasern, aus denen das Textilmaterial hergestellt werden kann, bestehen beispielsweise aus Polyamid oder aus Polyester. Ebenso können Elasthanfasern beigemischt werden. Die Fasern selbst können einen Durchmesser im Bereich von 20 µm bis 70 µm aufweisen. Das Textilmaterial besitzt dann eine Dicke im Bereich von 250 µm bis 700 µm.

Die Hülle kann als Schlauch oder als gewickeltes Bahnmaterial ausgestaltet sein. Eine Ausgestaltung der Hülle als Schlauch lässt sich beispielsweise durch Rundstricken oder Rundwirken oder Rundweben des Textilmaterials realisieren. Eine Ausführung als gewickeltes Bahnmaterial wird durch ein entsprechendes Fügen komplettiert, bei dem sich überlappende Umfangsenden des Flachmaterials oder Bahnenmaterials miteinander verbunden werden, beispielsweise mittels eines Klebvorgangs oder Schweißvorgangs (Ultraschallschweißen).

Bei der Herstellung des Textilmaterials können auch Fasern unterschiedlicher Materialien zur Verwendung kommen. Insbesondere bei Textilmaterialien mit Kette und Schuss können die Kettfasern aus einem anderen Material bestehen als die Schussfasern. Hierdurch lassen sich in Schussrichtung und in Kettenrichtung unterschiedliche Eigenschaften, wie Schrumpfbarkeit und/oder Dehnbarkeit, einstellen. Ferner kann auch bei einem Textilmaterial, das Maschen aufweist, durch die Art der verwendeten Maschen richtungsabhängige Eigenschaften, wie Schrumpfbarkeit und Dehnbarkeit, realisiert werden. Fasern zur Herstellung des Textilmaterials sind beispielsweise Polyester oder Polyamid. Bevorzugte Faserdicken liegen bei 0,2 mm bis 0,5 mm, vorzugsweise bei etwa 0,3 mm. Porenweiten oder Maschenweiten können bevorzugt im Bereich von 200 µm bis 500 µm liegen, vorzugsweise im Bereich von 300 µm. Das Flächengewicht des Textilmaterials liegt vorzugsweise im Bereich von 50 g/m² bis 200 g/m².

Bevorzugt kann bei einem schrumpfbaren Textilmaterial die Herstellung des Filterelements so durchgeführt werden, dass die Hülle zunächst im ungeschrumpften Zustand mit einem Übermaß bezüglich des Filterkörpers hergestellt wird, so dass die Hülle für die Herstellung besonders einfach auf den Filterkörper aufgezogen werden kann. Dabei kann sich radial zwischen Hülle und Filterkörper ein Radialspiel einstellen. Durch den anschließenden Schrumpfvorgang zieht sich die Hülle bzw. das Filtermaterial in der Umfangsrichtung stark zusammen. Schrumpfungen von bis zu 50 % sind realistisch.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen stark vereinfachten prinzipiellen Längsschnitt durch ein Hydraulikfilterelement,
- Fig. 2: einen stark vereinfachten, prinzipiellen Querschnitt des Hydraulikfilterelements während der Herstellung,
- Fig. 3: ein Querschnitt wie in Fig. 2, jedoch nach der Herstellung,
- Fig. 4: eine stark vereinfachte, vergrößerte Ansicht eines Textilmaterials.

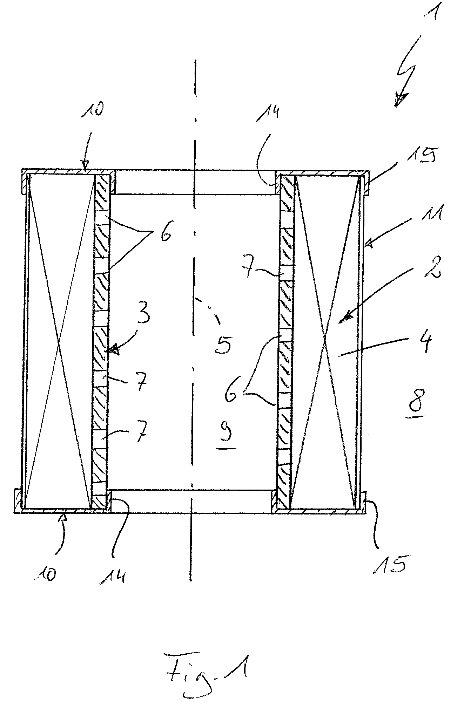

Entsprechend den Fig. 1 bis 3 umfasst ein Hydraulikfilterelement 1, bei dem es sich bevorzugt um ein Ölfilterelement handeln kann, einen zylindrischen Filterkörper 2 sowie eine zylindrische Innenzarge 3. Der Filterkörper 2 ist mit Hilfe eines sternförmig gefalteten Filtermaterials 4 hergestellt. Die Innenzarge 3 ist koaxial zum Filterkörper 2 angeordnet, wobei der Filterkörper 2 die Innenzarge 3 umhüllt. Eine gemeinsame Längsmittelachse ist in Fig. 1 mit 5 bezeichnet. Die Innenzarge 3 ist für das jeweilige Hydraulikmittel, insbesondere Öl, durchlässig ausgestaltet. Sie kann hierzu mit einer Perforation 6 gebildet sein, die aus einer Vielzahl einzelner Durchgangsöffnungen 7 besteht. Der Filterkörper 2 stützt sich radial innen an der Innenzarge 3 ab. Hierdurch kann der Filterkörper 2 im Betrieb relativ großen Druckdifferenzen zwischen einem außenliegenden Rohraum 8 und einem innenliegenden Reinraum 9 ausgesetzt werden.

Im Beispiel ist das Hydraulikfilterelement 1, das im Folgenden auch verkürzt als Filterelement 1 bezeichnet wird, mit zwei Endscheiben 10 ausgestattet, die an gegenüberliegenden axialen Enden des Filterkörpers 2 angeordnet sind. Im Beispiel sind beide Endscheiben 10 baugleich ausgeführt. Bei einer anderen Ausführungsform können sie jedoch auch unterschiedlich gestaltet sein. Zumindest eine der Endscheiben 10 ist zentral offen, um im Einbauzustand des Filterelements 1 eine fluidische Kommunikation mit dem Reinraum 9 zu ermöglichen.

Das hier vorgestellte Filterelement 1 ist außerdem mit einer Hülle 11 ausgestattet, die zylindrisch ausgestaltet ist und die sich ebenfalls koaxial zur Längsmittelachse 5 erstreckt. Die Hülle 11 ist radial außen am Filterkörper 2 angeordnet. Sie ist für das jeweilige Hydraulikmittel durchlässig ausgestaltet. Dabei besitzt die Hülle 11 eine größere Durchlässigkeit, also einen kleineren Durchströmungswiderstand als das Filtermaterial 4 des Filterkörpers 2.

Im Beispiel erstreckt sich die Hülle 11 im Wesentlichen über die gesamte axiale Länge des Filterkörpers 2. Sie umhüllt zumindest die gesamte Außenseite des Filterkörpers 2, die sich zwischen den Endscheiben 10 erstreckt.

Die Hülle 11 liegt bevorzugt unter einer Vorspannung am Filterkörper 2 an. Die Hülle 11 liegt am Filterkörper 2 z.B. mit einer Vorspannung an, die ausreicht, das Filtermaterial 4 spielfrei gegen die Innenzarge 3 anzudrücken. Beim fertigen Filterelement 1 zeigt sich dieses Merkmal darin, dass das Filtermaterial 4 spielfrei an der Innenzarge 3 anliegt.

Die Hülle 11 besteht aus einem Textilmaterial, das durch Stricken oder Weben oder Wirken hergestellt ist. Ein derartiges Textilmaterial kann beispielsweise aus entsprechenden Kunststoffen, wie zum Beispiel Polyester oder Polyamid, hergestellt sein. Es besitzt eine ausreichende Beständigkeit gegenüber dem jeweiligen Hydraulikmedium und eignet sich in besonderer Weise zur Realisierung einer Vorfilterwirkung.

Erfindungsgemäß ist eine Ausgestaltung, bei welcher die Hülle 11 aus einem Schrumpfmaterial hergestellt ist bzw. besteht. Das Schrumpfmaterial kann bei entsprechenden Randbedingungen, insbesondere bei einer oberhalb des üblichen Betriebstemperaturbereichs des Hydraulikfilterelements 1 liegenden Schrumpftemperatur seine Abmessungen reduzieren, also schrumpfen. Hierdurch kann eine spielfreie Anlage der Hülle 11 am Filtermaterial 4 und bei entsprechenden Schrumpfkräften auch des Filtermaterials 4 an der Innenzarge 3 realisiert werden.

Erfindungsgemäß ist dabei die Verwendung eines Schrumpfmaterials, das einen richtungsabhängigen Schrumpf aufweist. Unter Schrumpf wird dabei das Schrumpfverhalten, also die Einschrumpfung bei den entsprechenden Randbedingungen, also insbesondere bei der jeweiligen Schrumpftemperatur, verstanden. Dabei ist das Schrumpfmaterial so ausgestaltet, dass es in der Umfangsrichtung des Filterkörpers 2 einen größeren Schrumpf aufweist als in der Axialrichtung des Filterkörpers 2. Beispielsweise kann der Schrumpf in der Umfangsrichtung zumindest dreimal oder wenigstens zehnmal größer sein als in der Axialrichtung. Denkbar ist beispielsweise eine Ausführungsform, bei welcher das Schrumpfmaterial in der Axialrichtung um weniger als 1 % schrumpft, während es gleichzeitig in der Umfangsrichtung um mindestens 3 bis 15% schrumpft. Ein richtungsabhängiges Schrumpfverhalten kann z.B. durch eine gezielte Faserorientierung im Schrumpfmaterial realisiert werden.

Durch die Verwendung eines derartigen richtungsabhängig schrumpfenden Materials ist es insbesondere möglich, den Schrumpfvorgang so durchzuführen, dass die Hülle 11 nach dem Schrumpfen sich nach wie vor im Wesentlichen vollständig über die gesamte axiale Länge des Filterkörpers 2 erstreckt, während in der Umfangsrichtung eine vergleichsweise hohe Spannung erzeugt wird, die das Filtermaterial 4 radial nach innen gegen die Innenzarge 3 antreibt.

Die Hülle 11 kann als gewickeltes Bahnenmaterial ausgestaltet sein. Die in Umfangsrichtung aneinandergrenzenden Enden des Bahnenmaterials können dann einander überlappen und miteinander verklebt oder verschweißt sein. Ebenso können die Umfangsenden auf Stoß miteinander verbunden sein. Besonders vorteilhaft ist jedoch eine Ausführungsform, bei welcher die Hülle 11 als Schlauch ausgestaltet ist, so dass sie besonders einfach auf den Filterkörper 2 aufgeschoben werden kann und zusätzliche Befestigungsschritte entfallen können.

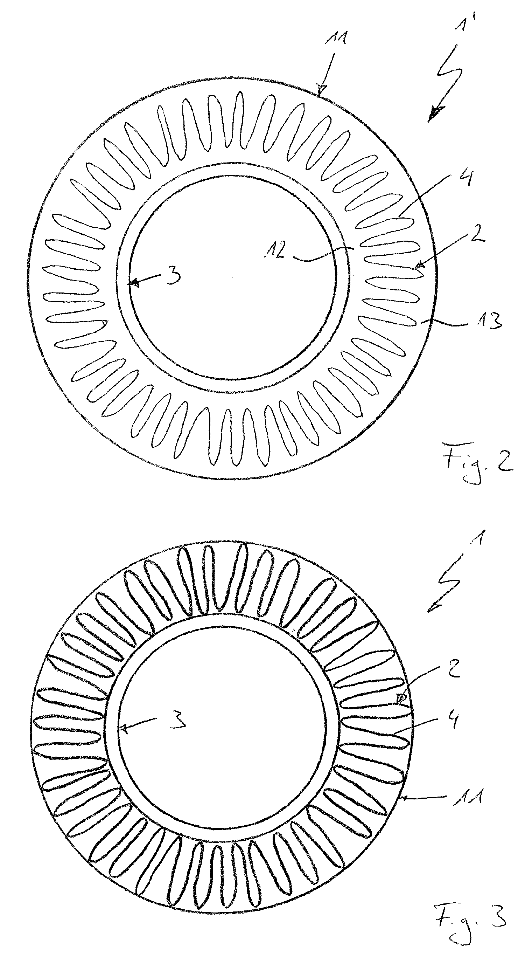

Mit Bezug auf die Fig. 2 und 3 wird im Folgenden ein Verfahren zum Herstellen eines derartigen Hydraulikfilterelements 1 näher erläutert. Fig. 2 zeigt dabei ein fortgeschrittenes Stadium der Herstellung, bei dem die Innenzarge 3, der Filterkörper 2 und die Hülle 11 koaxial zueinander angeordnet sind. Dieser Zwischenzustand des Filterelements 1 wird in Fig. 2 mit 1' bezeichnet. In diesem Zwischenzustand ist es möglich, dass radial zwischen der Innenzarge 3 und dem Filtermaterial 4 ein inneres Radialspiel 12 auftritt. Zusätzlich oder alternativ kann radial zwischen der Hülle 11 und dem Filtermaterial 4 ein äußeres Radialspiel 13 auftreten. Alternativ kann die Hülle 11 auch so angebracht werden, dass sie von Anfang an außen am Filtermaterial 4 anliegt.

Das Aufbringen der Hülle 11 kann dabei so durchgeführt werden, dass sie das Filtermaterial 4 gegen die Innenzarge 3 andrückt. Dies kann besonders einfach dadurch realisiert werden, dass eine schrumpfbare Hülle 11, also eine aus einem Schrumpfmaterial hergestellte Hülle 11 verwendet wird. Bei entsprechenden Randbedingungen kann die Hülle 11 aufgeschrumpft werden. Bevorzugt werden dabei thermische Schrumpfverfahren. Bei einer entsprechenden Schrumpftemperatur zieht sich das Schrumpfmaterial zusammen, das heißt, es schrumpft. In der Folge reduziert sich der Umfang der Hülle 11. Hierdurch wird zunächst das ggfs. Vorhandene äußere Radialspiel 13 eliminiert und die Hülle 11 kommt am Filtermaterial 4 außen zur Anlage. Durch Fortsetzen des Schrumpfvorgangs reduziert die Hülle 11 ihren Umfang weiter, wodurch in der Hülle 11 eine in Umfangsrichtung orientierte Zugspannung erzeugt wird. Diese Zugspannung wird am Filtermaterial 4 nach innen abgestützt, wodurch eine radial nach innen orientierte Druckkraft auf das Filtermaterial 4 eingeleitet wird. Bei einer entsprechenden Auslegung des Schrumpfvorgangs bzw. bei einer entsprechenden Auslegung des Hüllenmaterials und bei einer entsprechenden Dimensionierung der Hülle 11 kann dadurch auch das innere Radialspiel 12 eliminiert werden, so dass das Filtermaterial 4 unmittelbar an der Innenzarge 3 radial zur Anlage kommt.

Sobald nun die Hülle 11 so am Filtermaterial 4 angebracht ist, dass dieses radial innen gegen die Innenzarge 3 angedrückt ist, kann die so aufgefundene Relativlage zwischen Filtermaterial 4 und Innenzarge 3 fixiert werden. Die Fixierung dieser Relativlage kann beispielsweise dadurch erfolgen, dass die Endscheiben 10 montiert werden. Die Endscheiben 10 können beispielsweise mit dem Filtermaterial 4 verklebt werden. Sobald der Klebstoff erstarrt ist, ist die Relativlage zwischen dem Filtermaterial 4 und den Endscheiben 10 fixiert und somit auch gegenüber der Innenzarge 3. Zweckmäßig erfolgt die Verklebung so, dass die Endscheiben 10 gleichzeitig auch an der Innenzarge 3 fixiert werden.

Im Beispiel der Fig. 1 besitzen die Endscheiben 10 jeweils einen Innenkragen 14, der einen nicht näher bezeichneten Innenrand der Endscheibe 10 umschließt und der radial innen die Innenzarge 3 axial überlappt. Außerdem besitzen die Endscheiben 10 im Beispiel der Fig. 1 jeweils einen Außenkragen 15, der einen nicht näher bezeichneten Außenrand der jeweiligen Endscheibe 10 umschließt. Ferner übergreift der jeweilige Außenkragen 15 den Filterkörper 2 und im Beispiel außerdem die Hülle 11 radial außen in axialer Richtung. Je nach Fixierung zwischen Endscheibe 10 und Filterkörper 2 kann somit auch die Hülle 11 an den Endscheiben 10 fixiert, insbesondere verklebt werden.

Die Hülle 11 kann entsprechend einer besonders vorteilhaften Ausführungsform aus einem bedruckbaren Material hergestellt sein, so dass es insbesondere möglich ist, die Hülle 11 als Träger von gedruckter Information zu verwenden. Beispielsweise können Verwendungshinweise, Sicherheitshinweise, Herstellernamen sowie Herstellermarken und dergleichen auf die Hülle 11 aufgedruckt werden.

Die Hülle 11 erleichtert außerdem die Handhabung der Filterelemente 1. Gleichzeitig kann sie einen gewissen Schutz der Filterelemente 1 bzw. des Filtermaterials 4 bieten. Beispielsweise kann das Filtermaterial 4 selbst mehrlagig gestaltet sein. Insbesondere ist eine Konfiguration denkbar, bei welcher das Filtermaterial einen Kern aus Vliesmaterial aufweist und radial außen sowie radial innen mit einem Metallnetz versehen ist. Das Metallnetz führt zu einer intensiven Stabilisierung des Filtermaterials 4, kann jedoch vergleichsweise scharfkantig sein und so während der Handhabung der Filterelemente 1 eine Quelle für Verletzungen darstellen. Durch die Hülle 11 lassen sich die Filterelemente 1 ohne weiteres handhaben, ohne dass eine direkte Kontaktierung mit dem Filtermaterial 4 zu befürchten steht.

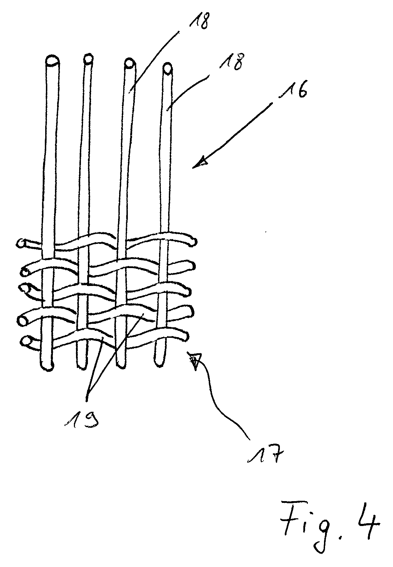

Fig. 4 zeigt nun exemplarisch einen Ausschnitt eines gewebten Textilmaterials 16, das zur Herstellung der Hülle 11 verwendet werden kann. Es besitzt eine Kette-Schuss-Struktur 17, die Kettfasern 18 und Schussfasern 19 aufweist. Die Kettfasern 18 verlaufen parallel zueinander und die Schussfasern 19 erstrecken sich quer zu den Kettfasern 18. Bevorzugt wird die Hülle 11 mit dem Textilmaterial 16 so hergestellt, dass in der fertigen Hülle 11 die Kettfasern 18 parallel zur Axialrichtung der Hülle 11 orientiert sind, während sich die Schussfasern 19 in der Umfangsrichtung der Hülle 11 erstrecken, oder umgekehrt. Durch entsprechende Auswahl der Fasermaterialien und/oder Faserdicken kann beispielsweise die Schrumpfbarkeit in der Umfangsrichtung deutlich stärker ausgeprägt werden als in der Axialrichtung.

## Patentansprüche

1. Hydraulikfilterelement, insbesondere Ölfilterelement,
- mit einem zylindrischen Filterkörper (2) aus einem sternförmig gefalteten Filtermaterial (4),
- mit einer zylindrischen Innenzarge (3), an der sich der Filterkörper (2) radial innen spielfrei abstützt,
- mit einer für das jeweilige Hydraulikmittel durchlässigen, zylindrischen Hülle (11), die radial außen am Filterkörper (2) unter Vorspannung anliegt und die aus einem gewebten oder gestrickten oder gewirkten Textilmaterial (16) besteht,
- mit zwei Endscheiben (10), die an axialen Enden des Filterkörpers (2) angebracht sind und zumindest mit dem Filtermaterial (4) verklebt sind, um die Relativlage zwischen Filtermaterial (4) und Innenzarge (3) zu fixieren,
**dadurch gekennzeichnet,**
- **dass** die Hülle (11) auf den Filterkörper (2) thermisch aufgeschrumpft ist,
- **dass** die Hülle (11) aus einem Material (16) besteht, das in der Umfangsrichtung einen größeren Schrumpf aufweist als in der Axialrichtung.

2. Hydraulikfilterelement nach Anspruch 1,
**dadurch gekennzeichnet,**
**dass** das Textilmaterial (16) eine Kette-Schuss-Struktur (17) mit zueinander parallelen Kettfasern (18) und dazu quer verlaufende Schussfasern (19) aufweist, wobei die Kettfasern (18) und die Schussfasern (19) aus verschiedenen Kunststoffen und/oder Kunststoffkombinationen bestehen.

3. Hydraulikfilterelement nach Anspruch 2,
**dadurch gekennzeichnet,**
**dass** die Kettfasern (18) in der Hülle (11) axial verlaufen, während sich die Schussfasern (19) in der Umfangsrichtung erstrecken, oder umgekehrt.

4. Verfahren zum Herstellen eines Hydraulikfilterelements, insbesondere eines Ölfilterelements,
- bei dem außen auf ein sternförmig gefaltetes Filtermaterial (4) eines zylindrisches Filterkörpers (2) eine für das jeweilige Hydraulikmittel durchlässige zylindrische Hülle (11) aus einem gewebten oder gestrickten oder gewirkten Textilmaterial (16) aufgebracht und danach thermisch aufgeschrumpft wird, derart, dass dadurch das Filtermaterial (4) gegen eine in den Filterkörper (2) eingesetzte Innenzarge (3) angedrückt wird, so dass eine Relativlage zwischen Filtermaterial (4) und Innenzarge (3) entsteht, in der das Filtermaterial (4) spielfrei an der Innenzarge (3) anliegt,
- bei dem anschließend diese Relativlage zwischen Filtermaterial (4) und Innenzarge (3) fixiert wird, indem an axialen Enden des Filterkörpers (2) je eine Endscheibe (10) angebracht wird.

## Claims

1. A hydraulic filter element, in particular oil filter element,
- with a cylindrical filter body (2) of a radially pleated filter material (4),
- with a cylindrical inner frame (3), on which the filter body (2) supports itself radially inside without play,
- with a cylindrical sleeve (11) that is permeable to the respective hydraulic means, which lies against the filter body (2) radially outside under preload and which consists of a woven or knitted textile material (16),
- with two end discs (10), which are attached on axial ends of the filter body (2) and are glued at least to the filter material (4) in order to fix the relative position between filter material (4) and inner frame (3),
**characterized**
- **in that** the sleeve (11) is thermally shrunk onto the filter body (2),
- **in that** the sleeve (11) consists of a material (16) which in the circumferential direction has a greater shrinkage than in the axial direction.

2. The hydraulic filter element according to claim 1, **characterized in that** the textile material (16) has a warp and weft structure (17) with warp fibres (18) running parallel to one another and weft fibres (19) running transversely thereto, wherein the warp fibres (18) and the weft fibres (19) consist of different plastics and/or plastic combinations.

3. The hydraulic filter element according to claim 2,
**characterized in**
**that** the warp fibres (18) run axially in the sleeve (11) while the weft fibres (19) extend in the circumferential direction, or vice versa.

4. A method for producing a hydraulic filter element, in particular an oil filter element,
- in which a cylindrical sleeve (11) that is permeable to the respective hydraulic means and made of a woven or knitted textile material (16) is applied to the outside of a radially pleated filter material (4) of a cylindrical filter body (2) and thereafter thermally shrunk on in such a manner that because of this the filter material (4) is pressed against an inner frame (3) inserted in the filter body (2) so that a relative position between filter material (4) and inner frame (3) is created, in which the filter material (4) lies against the inner frame (3) without play,
- in which this relative position between filter material (4) and inner frame (3) is subsequently fixed in that on axial ends of the filter body (2) an end disc (10) each is attached.

## Revendications

1. Elément de filtre hydraulique, notamment élément de filtre à huile,
- comportant un corps de filtre cylindrique (2) constitué d'un matériau de filtre (4) plié en forme d'étoile,
- comportant un cadre intérieur cylindrique (3), sur lequel le corps de filtre (2) s'appuie radialement à l'intérieur sans jeu,
- comportant une enveloppe (11) cylindrique, perméable au milieu hydraulique respective, qui vient reposer radialement à l'extérieur sur le corps de filtre (2) sous une précontrainte et qui est constitué d'un matériau textile (16) tissé ou tricoté ou maillé,
- comportant deux rondelles d'extrémité (10), qui sont montées sur les extrémités axiales du corps de filtre (2) et sont collées au moins avec le matériau de filtre (4), afin de fixer la position relative entre le matériau de filtre (4) et le cadre intérieur (3),
**caractérisé en ce**
- **que** l'enveloppe (11) est frettée thermiquement sur le corps de filtre (2),
- **que** l'enveloppe (11) est constituée d'un matériau (16), qui présente dans la direction circonférentielle un plus grand rétrécissement dans la direction circonférentielle que dans la direction axiale.

2. Elément de filtre hydraulique selon la revendication 1,
**caractérisé en ce**
**que** le matériau textile (16) présente une structure chaîne-trame (17) avec des fils de chaîne (18) parallèles les uns aux autres et des fils de trame (19) s'étendant transversalement à ceux-ci, dans lequel les fils de chaîne (18) et les fils de trame (19) est constitué de différents plastiques et/ou différentes combinaisons de plastique.

3. Elément de filtre hydraulique selon la revendication 2,
**caractérisé en ce**
**que** les fils de chaîne (18) s'étendent axialement dans l'enveloppe (11), alors que les fils de trame (19) s'étendent dans la direction circonférentielle, ou inversement.

4. Procédé de fabrication d'un élément de filtre hydraulique, notamment d'un élément de filtre à huile,
- dans lequel à l'extérieur sur un matériau de filtre (4) plié en étoile d'un corps de filtre cylindrique (2), une enveloppe (11) perméable au milieu hydraulique respectif constituée d'un matériau textile (16) tissé ou tricoté ou maillé est montée et ensuite frettée thermiquement, de telle sorte que de cette manière le matériau de filtre (4) soit pressé contre un cadre intérieur (3) inséré dans le corps de filtre (2), de sorte qu'une position relative entre le matériau de filtre (4) et le cadre intérieur (3) soit obtenue, dans laquelle le matériau de filtre (4) vient reposer sans jeu sur le cadre intérieur (3),
- dans lequel ensuite cette position relative est fixée entre le matériau de filtre (4) et le cadre intérieur (3), en montant respectivement une rondelle d'extrémité (10) aux extrémités axiales du corps de filtre (2).
